# DEMANDE DE BREVET EUROPEEN

(11) **EP 1 745 978 A1**
(43) Date de publication de la demande: **24.01.2007**
(21) Numéro de dépôt: 06300738.9
(22) Date de dépôt: 30.06.2006
(51) Int. Cl.: B60N 2/30, B60N 2/36

(54) **Siège apte à être monté sur une structure de support**

(30) Priorité: 30.06.2005 FR 0551840
(71) Demandeur: Renault s.a.s., 92100 Boulogne Billancourt (FR)
(72) Inventeur: Hewak, Gregor, 95490 Vaureal (FR); Vilatte, Jean-René, Avenue Niavaran Area Teheran (IR)

(57) **Abrégé**

Siège (8) apte à être monté sur une structure de support (12) et comportant
- un dossier (10) comportant une partie supérieure (10b) et une partie inférieure (10a) montée basculante autour d'un axe fixe (D) de la structure de support (12) entre une position d'utilisation dans laquelle le dossier (10) est sensiblement vertical et une position de rangement dans laquelle le dossier (10) est sensiblement horizontal,
- une assise (9) comportant une partie avant (9a) et une partie arrière (9b) et qui est montée mobile entre une position d'utilisation dans laquelle l'assise (9) est sensiblement horizontale et une position de rangement dans laquelle l'assise (9) est sensiblement horizontale,
- des moyens de guidage (19) de la partie avant (9a) de l'assise (9)
- des moyens de guidage (11) de la partie arrière (9b) de l'assise (9) entre ses deux positions

caractérisé en ce que les moyens de guidage (11) de la partie arrière (9b) comportent au moins une glissière de guidage (14) fixée à la structure de support (12).

## Description

L'invention concerne un siège apte à être monté sur une structure de support et comportant :
- un dossier comportant une partie supérieure et une partie inférieure montée basculante autour d'un axe fixe de la structure de support entre une position d'utilisation dans laquelle le dossier est sensiblement vertical et une position de rangement dans laquelle le dossier est sensiblement horizontal,
- une assise comportant une partie avant et une partie arrière et qui est montée mobile entre une position d'utilisation dans laquelle l'assise est sensiblement horizontale et une position de rangement dans laquelle l'assise est sensiblement horizontale,
- des moyens de guidage de la partie avant de l'assise,
- des moyens de guidage de la partie arrière de l'assise entre ses deux positions.

Les véhicules actuels comportent généralement des deuxième et troisième rangées de sièges qui sont placées derrière le siège du conducteur et du passager avant (première rangée). Dans la pratique, les propriétaires de ces véhicules expriment le besoin de pouvoir enlever ou replier temporairement des sièges afin d'augmenter le volume du coffre et transporter des objets encombrants. C'est pourquoi, certains véhicules ont été, jusqu'ici, équipés avec des bacs ou dans des renforcements situés à l'intérieur du plancher.

On connaît par exemple, la publication FR2826321 concernant un siège escamotable de ce type. Ce siège comporte des mécanismes complexes de plusieurs bielles permettant de passer d'une position d'utilisation à une position de rangement et inversement.

L'invention vise à pallier ces inconvénients en proposant un siège escamotable dont le mécanisme est plus simple.

A cet effet, l'invention propose du type cité ci-dessus, caractérisé en ce que les moyens de guidage de la partie arrière comportent au moins une glissière de guidage fixée à la structure de support.

Selon d'autres caractéristiques de l'invention, la glissière de guidage est globalement rectiligne.

Selon d'autres caractéristiques de l'invention, la glissière de guidage est inclinée d'avant en arrière.

Selon d'autres caractéristiques de l'invention, l'axe de basculement du dossier est situé à l'extrémité avant de la glissière de guidage.

Selon d'autres caractéristiques de l'invention, le siège comporte des moyens de verrouillage de l'assise, en position d'utilisation, portés par le dossier.

Selon d'autres caractéristiques de l'invention, les moyens de guidage de la partie avant comporte au moins une bielle dont l'extrémité inférieure est montée basculante sur un axe fixe et dont l'extrémité supérieure est montée articulée sur la partie avant.

Selon d'autres caractéristiques de l'invention, en position de rangement, l'assise et le dossier se superposent partiellement.

Selon d'autres caractéristiques de l'invention, la structure de support est constituée en partie par un élément de structure de la caisse de véhicule.

Selon d'autres caractéristiques de l'invention, le plancher comporte un logement de façon à recevoir le siège, en position de rangement.

Selon d'autres caractéristiques de l'invention, le logement comporte une cavité avant et une cavité arrière sous le plancher.

Selon d'autres caractéristiques de l'invention, la face arrière du dossier affleure le plancher de façon à recouvrir la cavité avant en position de rangement.

Selon d'autres caractéristiques de l'invention, la cavité arrière reçoit au moins une partie de l'assise en position de rangement.

Selon d'autres caractéristiques de l'invention, en position de rangement, la partie supérieure du dossier est en appui sur une traverse.

D'autres caractéristiques et avantages de l'invention apparaîtront à la lecture de la description d'exemples de réalisation en référence aux figures annexées.

La figure 1 représente une vue en perspective d'une structure de siège en position d'utilisation et monté sur un support de structure selon l'invention.

La figure 2 représente une vue en coupe de côté du siège en position d'utilisation.

La figure 6 représente une vue en coupe de côté du siège en position de rangement.

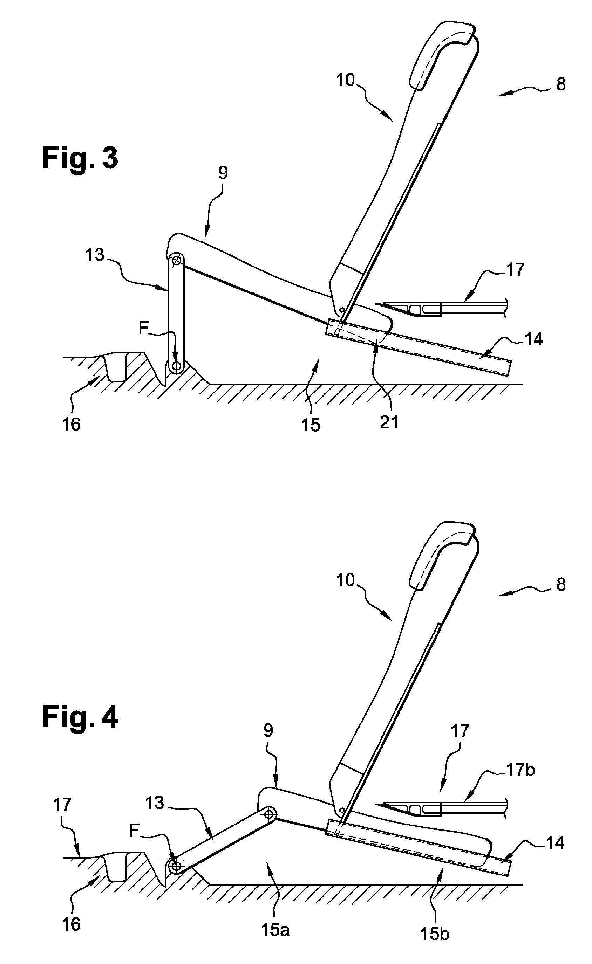

Les figures 3, 4 et 5 représentent des vues en coupe de côté du siège en position intermédiaire aux positions précédentes.

Des éléments identiques ou analogues sont désignés par les mêmes chiffres de référence.

Le siège 8 selon l'invention est sensiblement symétrique par rapport à un plan vertical longitudinal passant par son milieu. Pour une meilleure clarté, les organes situés à droite du siège sont repérés avec des références identiques à celles utilisées pour repérer les organes correspondants situés à gauche du siège, mais ces références sont affectées du signe prime.

On définit les termes avant et arrière par rapport à la direction longitudinale du véhicule.

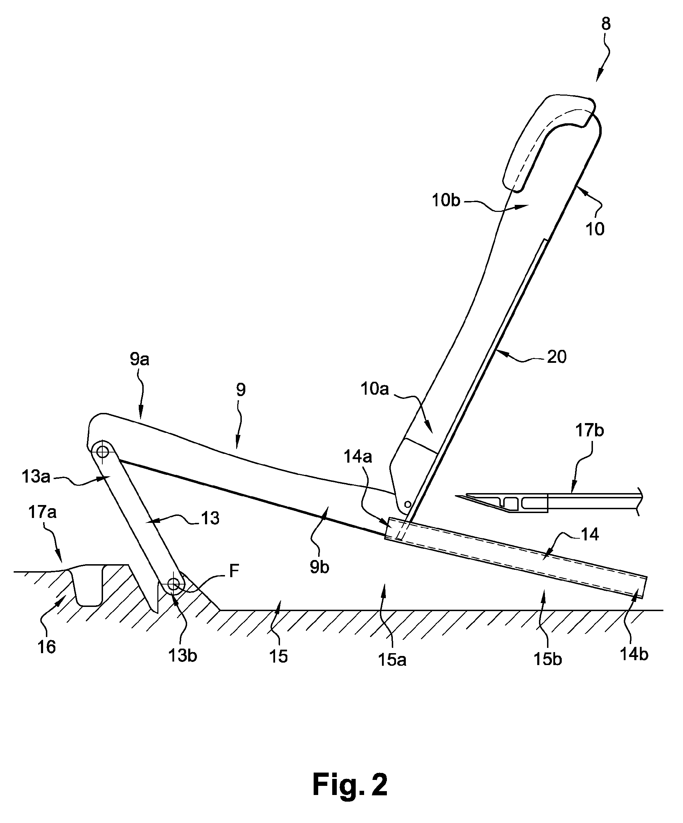

Tel que représenté à la figure 2, le siège 8 est escamotable entre une position d'utilisation et une position de rangement dans le plancher 17 de véhicule automobile.

Le plancher 17 du véhicule automobile, sensiblement horizontal, comporte successivement de l'avant vers l'arrière une plate-forme avant 17a sous laquelle est située une traverse 16, un logement 15, une plate-forme arrière 17b d'un coffre de rangement du véhicule. Le logement 15 comporte une cavité avant 15a ouverte et une cavité arrière 15b sous la plate-forme arrière 17b. Le siège 8 masque globalement le logement 15 dans la position d'utilisation et le siège 8 recouvre sensiblement le logement 15 en position de rangement.

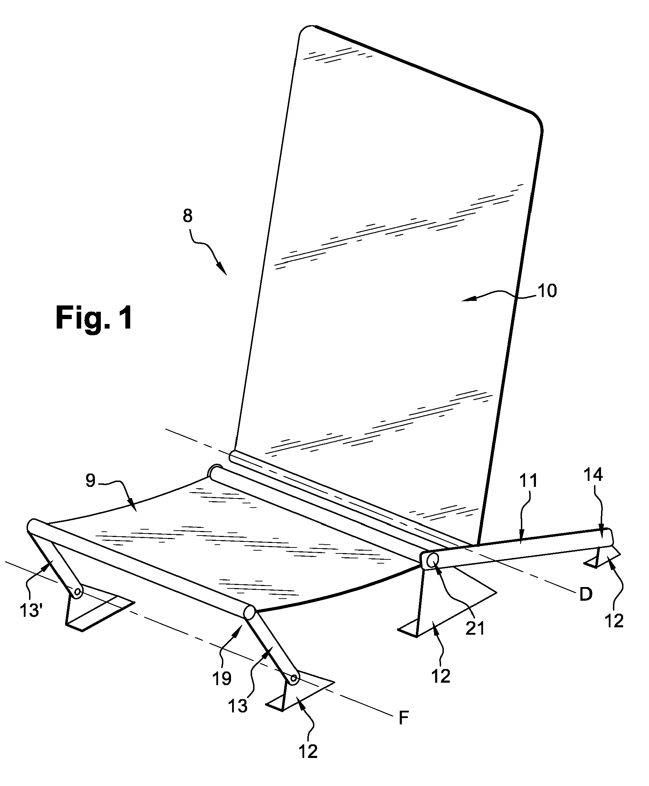

Tel que représenté aux figures 1 et 2, le siège 8 est en position d'utilisation. Le siège 8 comporte une assise 9 sensiblement horizontale et un dossier 10 sensiblement vertical. L'assise 9 et le dossier 10 sont mobiles indépendamment l'un de l'autre. Le siège 8 est monté sur une structure de support 12 pour être fixé à la structure de la caisse du véhicule. La structure de support 12 peut être aussi constituée en partie par un élément de structure de la caisse du véhicule.

L'assise 9 comporte une partie avant 9a et une partie arrière 9b et elle est montée mobile grâce à des moyens de guidage 11, 19.

Les moyens de guidage 11, 19 comportent des moyens de guidage 19 de la partie avant 9a de l'assise 9 et des moyens de guidage 11 de la partie arrière 9b de l'assise 9.

Les moyens de guidage 19 de la partie avant 9a comportent un jeu de bielles 13, 13'. Tel que représenté sur la figure 2, ces bielles 13, 13' sont inclinées d'avant en arrière. Elles comportent chacune une extrémité supérieure 13a, 13a' et une extrémité inférieure 13b, 13b'. L'extrémité supérieure 13a, 13a' est située plus haut que l'extrémité inférieure 13b, 13b'. L'extrémité supérieure 13a, 13a' est montée articulée sur la partie avant 9a de l'assise 9. L'extrémité inférieure 13b, 13b' est montée basculante sur un axe transversal fixe F de la structure de support 12.

Les moyens de guidage 11 de la partie arrière 9b comportent un jeu de glissières de guidage 14, 14' rectilignes. Tel que représenté à la figure 2, elles sont inclinées d'avant en arrière. Elles comportent chacune une extrémité avant 14a, 14a' et une extrémité arrière 14b, 14b'. L'extrémité avant 14a, 14a' et l'extrémité arrière 14b, 14b' sont montées fixes sur la structure de support 12. L'extrémité avant 14a, 14a' est plus haute que l'extrémité arrière 14b, 14b'. L'extrémité avant 14a, 14a' et l'extrémité arrière 14b, 14b' sont situées dans le logement 15. L'extrémité avant 14a, 14a' est située dans la cavité avant 15a et l'extrémité arrière 14b, 14b' est située dans la cavité arrière 15b. L'extrémité avant 14a, 14a' est située au dessous de l'extrémité supérieure 13a, 13a'. L'extrémité arrière 13b, 13b' et l'extrémité inférieure 14b, 14b' sont situées sensiblement au même niveau. Chaque côté de la partie arrière 9b de l'assise 9 comporte, par exemple, un galet 21, 21' coopérant avec la glissière 14, 14' de façon à permettre le coulissement du galet 21, 21' dans la glissière 14, 14' entre l'extrémité avant 14a, 14a' et l'extrémité arrière 14b, 14b'.

Le dossier 10 comporte une partie supérieure 10b et une partie inférieure 10a. Le dossier 10 est monté basculant autour d'un axe transversal fixe D situé à l'extrémité avant 14a, 14a' de la glissière 14, 14'.

Les positions successives de la transformation du siège 8 depuis la position d'utilisation jusqu'à la position de rangement et le fonctionnement du siège 8 selon l'invention sont décrits, ci-dessous, en regard des figures 1 à 6.

Tel que représenté à la figure 1, le siège 8 est en position d'utilisation dans laquelle le dossier 10 est sensiblement vertical incliné vers l'arrière et l'assise est sensiblement horizontal incliné vers l'avant. La bielle 13, 13' et la glissière sont inclinées d'avant en arrière. Les bielles 13, 13' sont hors du logement 15. Les galets 21, 21' sont situés à l'extrémité avant des glissières 14, 14'.

Tel que représenté aux figures 3 et 4, lors du passage de la position d'utilisation à la position de rangement, la bielle 13, 13' décrit un cercle en basculant vers l'arrière et le galet 21, 21' coulisse dans la glissière 14, 14'. Le mouvement de la bielle 13, 13' et celui de la glissière 14, 14' est réalisé de façon synchronisée. L'assise 9 passe sous le dossier 10. La plate-forme arrière 17b du plancher 17 est agencé de manière à laisser l'assise 9 passer sous le dossier 10.

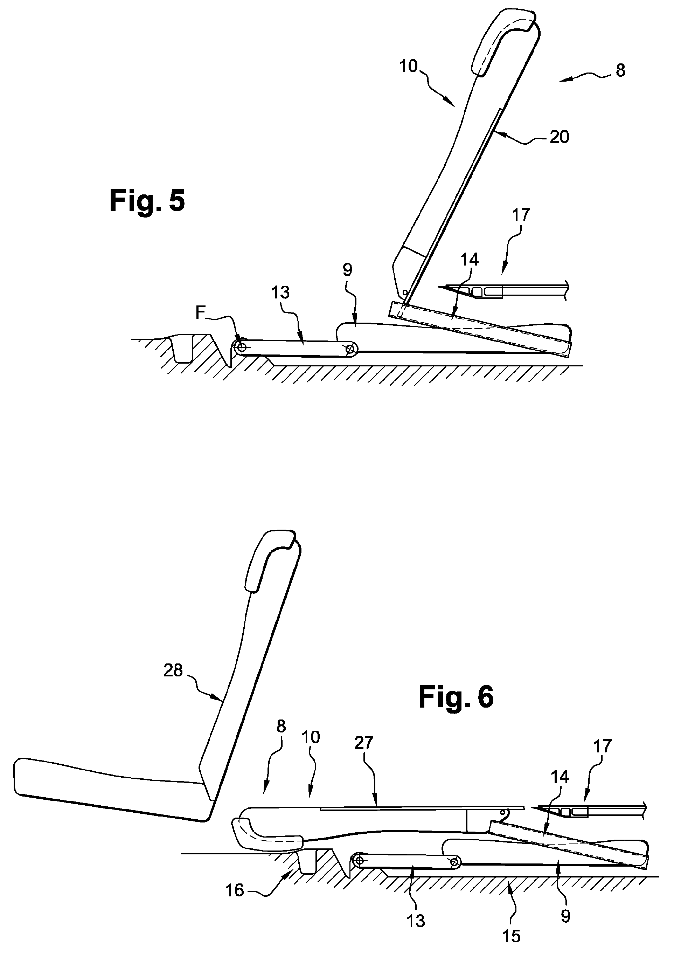

Tel que représenté à la figure 5, une fois que les galets atteignent les extrémités arrière 14b et 14b' et que les bielles 13, 13' s'orientent sensiblement horizontalement dans le logement 15, l'assise 9 est en position de rangement. L'assise 9 est alors sensiblement horizontale dans le logement 15, en partie dans la cavité avant 15a et en partie dans la cavité arrière 15b.

Ensuite, tel que représenté à la figure 5, par la flèche, le dossier 10 peut être basculé autour de l'axe D vers l'avant. L'utilisateur prendra soin d'avancer le siège 28 situé devant le siège 8 pour permettre le basculement du dossier 10.

Tel que représenté à la figure 6, ce basculement est réalisé de façon à ce que le dossier 10 est sensiblement horizontal et superposé partiellement sur l'assise 9 dans le logement 15. La partie supérieure 10b du dossier 10 est en appui sur la plate-forme avant 17a sous laquelle est située la traverse 16. La face arrière 27 du dossier 10 affleure la plate-forme arrière 17b de façon à recouvrir la cavité avant 15a. Le plancher 17 est donc continu et formé par une partie du siège 8. De cette façon, le coffre offre un volume plus important.

La transformation du siège 8 depuis la position de rangement vers la position d'utilisation s'effectue selon un mouvement contraire à celui décrit ci-dessus.

En position d'utilisation, le siège 8 est bloqué par des moyens de verrouillage 20 de l'assise et du dossier. Le moyen de verrouillage 20 de l'assise 9 est porté par le dossier 10. Par exemple, une tige métallique portée par le dossier 10 verrouille l'assise 9 par un mouvement de translation suivant la face arrière 27 du dossier 10 dans la partie arrière 9b de l'assise 9.

L'invention n'est pas limitée au mode de réalisation décrit, fourni à titre d'exemple illustratif et non limitatif. Par exemple, concernant le logement 15, il pourrait avoir une autre forme de façon à ce que la face avant du dossier 10 affleure le plancher 17. Par exemple, concernant les moyens de guidage 19 de la partie avant 9a de l'assise 9 peuvent être un jeu de glissières de forme adaptée arrondie.

## Revendications

1. Siège (8) apte à être monté sur une structure de support (12) et comportant
- un dossier (10) comportant une partie supérieure (10b) et une partie inférieure (10a) montée basculante autour d'un axe fixe (D) de la structure de support (12) entre une position d'utilisation dans laquelle le dossier (10) est sensiblement vertical et une position de rangement dans laquelle le dossier (10) est sensiblement horizontal,
- une assise (9) comportant une partie avant (9a) et une partie arrière (9b) et qui est montée mobile entre une position d'utilisation dans laquelle l'assise (9) est sensiblement horizontale et une position de rangement dans laquelle l'assise (9) est sensiblement horizontale,
- des moyens de guidage (19) de la partie avant (9a) de l'assise (9)
- des moyens de guidage (11) de la partie arrière (9b) de l'assise (9) entre ses deux positions
**caractérisé en ce que** les moyens de guidage (11) de la partie arrière (9b) comportent au moins une glissière de guidage (14) fixée à la structure de support (12).

2. Siège (8) selon la revendication 1, **caractérisé en ce que** la glissière de guidage (14) est globalement rectiligne.

3. Siège (8) selon la revendication 2, **caractérisé en ce que** la glissière de guidage (14) est inclinée d'avant en arrière.

4. Siège (8) selon l'une des revendications 1 à 3, **caractérisé en ce que** l'axe (D) de basculement du dossier (10) est situé à l'extrémité avant (14a) de la glissière de guidage (14).

5. Siège (8) selon l'une des revendications 1 à 4, **caractérisé en ce que** le siège (8) comporte des moyens de verrouillage (20) de l'assise (9), en position d'utilisation, portés par le dossier (10).

6. Siège (8) selon l'une des revendications 1 à 5, **caractérisé en ce que** les moyens de guidage (19) de la partie avant (9a) comporte au moins une bielle (13) dont l'extrémité inférieure (13b) est montée basculante sur un axe fixe (F) et dont l'extrémité supérieure (13a) est montée articulée sur la partie avant (6a).

7. Siège (8) selon l'une des revendications 1 à 6, **caractérisé en ce qu'**en position de rangement, l'assise (9) et le dossier (10) se superposent partiellement.

8. Véhicule automobile comportant un plancher (17) et un siège (8) selon l'une des revendications précédentes, **caractérisé en ce que** la structure de support (12) est constituée en partie par un élément de structure de la caisse de véhicule.

9. Véhicule automobile selon la revendication 8, **caractérisé en ce que**, le plancher (17) comporte un logement (15) de façon à recevoir le siège (8), en position de rangement.

10. Véhicule automobile selon la revendication 9, **caractérisé en ce que**, le logement (15) comporte une cavité avant (15a) et une cavité arrière (15b) sous le plancher (17).

11. Véhicule automobile selon la revendication 10, **caractérisé en ce que**, la face arrière (27) du dossier (10) affleure le plancher (17) de façon à recouvrir la cavité avant (15a) en position de rangement.

12. Véhicule automobile selon la revendication 10, **caractérisé en ce que**, la cavité arrière (15b) reçoit au moins une partie de l'assise (9) en position de rangement.

13. Véhicule selon l'une des revendications 8 à 12, **caractérisé en ce qu'**en position de rangement, la partie supérieure (10b) du dossier (10) est en appui sur une traverse (16).
